(19) Europäisches Patentamt
European Patent Office
Office européen des brevets

(11) **EP 2 044 387 B1**

(12) # EUROPÄISCHE PATENTSCHRIFT

(45) Veröffentlichungstag und Bekanntmachung des Hinweises auf die Patenterteilung:
**24.10.2012 Patentblatt 2012/43**

(51) Int Cl.:
***G01B 11/06*** *(2006.01)*  ***G02B 21/00*** *(2006.01)*

(21) Anmeldenummer: **07786234.0**

(22) Anmeldetag: **20.07.2007**

(86) Internationale Anmeldenummer:
**PCT/EP2007/006486**

(87) Internationale Veröffentlichungsnummer:
**WO 2008/009472 (24.01.2008 Gazette 2008/04)**

(54) **VERFAHREN UND VORRICHTUNG ZUR DICKENMESSUNG GROSSFLÄCHIGER GLASSUBSTRATE**

METHOD AND SYSTEM FOR THICKNESS MEASUREMENT OF LARGE-AREA GLASS SUBSTRATES

PROCÉDÉ ET DISPOSITIF POUR LA MESURE D'ÉPAISSEUR DE SUBSTRATS EN VERRE À GRANDE SURFACE

(84) Benannte Vertragsstaaten:
**DE**

(30) Priorität: **21.07.2006 DE 102006034244**

(43) Veröffentlichungstag der Anmeldung:
**08.04.2009 Patentblatt 2009/15**

(73) Patentinhaber: **Schott AG**
**55122 Mainz (DE)**

(72) Erfinder:
• **ORTNER, Andreas**
**55435 Gau-Algesheim (DE)**
• **GERSTNER, Klaus**
**65474 Bischofsheim (DE)**

• **JUNG, Sascha**
**55218 Ingelheim (DE)**

(74) Vertreter: **Herden, Andreas F.**
**Blumbach - Zinngrebe**
**PatentConsult**
**Patentanwälte**
**Alexandrastrasse 5**
**65187 Wiesbaden (DE)**

(56) Entgegenhaltungen:
| | |
|---|---|
| **EP-A1- 0 452 666** | **EP-A2- 0 546 362** |
| **DE-A1- 10 325 942** | **DE-A1- 19 837 551** |
| **DE-A1-102004 034 693** | **US-A- 3 670 568** |
| **US-A- 3 822 383** | **US-A- 4 476 717** |
| **US-A1- 2006 150 678** | **US-B1- 6 215 556** |

EP 2 044 387 B1

## Beschreibung

Die Erfindung betrifft allgemein die Überprüfung großflächiger transparenter plattenförmiger Substrate, wie insbesondere von Glasscheiben. Im speziellen betrifft die Erfindung ein Verfahren und eine Vorrichtung, mit welchen eine schnelle, durchgängige Dickenmessung an großflächigen Scheiben, wie sie insbesondere als Substrate für die Fertigung von TFT-Anzeigen eingesetzt werden, durchgeführt werden kann.

Matrixanzeigen, wie Flachbildschirme von Computern oder Displays von Mobiltelefonen werden in zunehmendem Maße als Active-Matrix-Anzeigen ausgeführt. Allgemein werden bei diesen Anzeigeeinrichtungen Dünnschicht-Transistorschaltungen direkt auf den Substraten der Anzeigeeinrichtungen abgeschieden. Im allgemeinen kommen hier Glasscheiben als Substrate zum Einsatz. An die Qualität der Substrate werden dabei sehr hohe Anforderungen gestellt. So kann bereits eine sehr geringe Welligkeit der Substrate dazu führen, daß die abgeschiedenen DünnschichtTransistoren nicht funktionieren. Ebenso ist auch eine gleichmäßige Dicke der Glasscheiben erforderlich.

Ähnlich wie bei der Herstellung von Halbleiter-Bauelementen auf Silizium-Substraten werden weiterhin auch bei der Herstellung von TFT-Anzeigen immer größere Substrate angestrebt, um durch eine höhere Parallelisierung in der Fertigung Kostenvorteile zu erzielen. Hierbei besteht nicht nur das Problem, großflächige Glassubstrate in der geforderten Qualität bereitzustellen. Auch an die Qualitätssicherung ergeben sich steigende Anforderungen, da immer größere Flächen möglichst umfänglich zu überprüfen sind, Zudem sollte eine Anordnung zur Überprüfung der Substrate auch möglichst unempfindlich gegenüber Ausfällen sein, so daß es bei Ausfall einzelner Komponenten nicht zu einem völligen Ausfall der Qualitätsüberprüfung kommt.

Aus der US 2006/0150678 A1 ist eine Inline-Messanlage zur Dickenmessung an bewegten Glassubstraten bekannt. Bei dieser Messanlage werden die Glassubstrate hängend an einem in Richtung der Ebene der Glasoberfläche feststehend angeordneten Triangulationssensor vorbeigeführt. Es wird daher nur jeweils ein Dickenprofil pro Glassubstrat entlang der Vorschubrichtung erstellt. Hierbei besteht dann aber die Möglichkeit, daß deutliche Abweichungen in der Glasdicke, insbesondere entlang von Linien parallel zur abgetasteten Meßlinie, nicht erfasst werden.

Die US 4,476,717 zeigt eine Vorrichtung zur Steuerung eines Paares von Messvorrichtungen, die quer zur Bewegungsrichtung einer Materialbahn Materialparameter messen.

Die EP 452 666 A1 beschreibt ein Verfahren sowie eine Vorrichtung zur Messung der Dicke einer Filmbeschichtung. Ein Paar von Dickesensoren bewegen sich simultan in entgegen gesetzter Richtung rechtwinklig zur Bewegungsrichtung des Filmes. Das beschriebene System erlaubt die gleichzeitige Messung an zwei Punkten, die symmetrisch zur Längenmittelachse des Filmes sind.

Bei dem Verfahren und der Vorrichtung nach der EP 0 546 362 A2 wird die Dicke eines sich vorwärts bewegenden Filmes von zwei unabhängigen Messköpfen gemessen. Die Messung erfolgt gleichzeitig parallel und quer zur Vorwärtsrichtung des Filmes.

Das Messsystem der US 3,670,568 misst die Verteilung der Reduktionsrate eines Metallstreifens. Hierzu wird jeweils ein Paar von Dickemessern am Eingang und am Ausgang einer Transporteinrichtung bereit gestellt. Die Messköpfe jeden Paares sind in einem definierten Abstand voneinander angeordnet. Die Dickemesser werden derart gesteuert, dass am Eingang und am Ausgang an den gleichen Stellen des Filmes gemessen wird.

Auch die US 3,822,383 zeigt ein System zur Messung der Dicke eines Materials, insbesondere eines Metallstreifens zumindest einer der Messköpfe wird quer zur Vorwärtsrichtung des Metallstreifens bewegt.

Der Erfindung liegt daher die Aufgabe zugrunde, eine robuste, für die umfassende, schnelle Erfassung großer Flächen geeignete Dickenmessung für großflächige transparente Substrate bereitzustellen.

Diese Aufgabe wird bereits in höchst überraschend einfacher Weise durch den Gegenstand der unabhängigen Ansprüche gelöst. Vorteilhafte Ausgestaltungen und Weiterbildungen der Erfindung sind in den jeweiligen abhängigen Ansprüchen angegeben.

Demgemäß ist eine Vorrichtung zur Dickenmessung von transparenten flachen Substraten vorgesehen, welche zumindest zwei Meßköpfe und eine Traversiereinrichtung mit zwei Traversiereinheiten umfasst. An den Traversiereinheiten ist jeweils zumindest ein Meßkopf befestigt. Die Traversiereinheiten sind mittels der Traversiereinrichtung über das Substrat quer zu einer Vorschubrichtung der Glasscheibe bewegbar, wobei die Traversiereinheiten vorzugsweise unabhängig voneinander bewegbar sind. Die Vorrichtung umfasst außerdem eine Steuereinrichtung, welche die Bewegung der Traversiereinheiten steuert, so daß die Traversiereinheiten im Betrieb phasenverschoben quer zur Vorschubrichtung des Substrats von Rand zu Rand bewegt werden. Die Phasenverschiebung ist insbesondere einstellbar. Mittels einer Auswerteeinrichtung können dann anhand der Daten der Meßköpfe Dickenprofile erstellt werden. In Bezug auf eine phasenverschobene Bewegung ist insbesondere eine Bewegung günstig, bei welcher die Startzeitpunkte für die Traversierungen der beiden Traversiereinheiten zeitlich versetzt liegen. Das jeweils zeitlich versetzte Starten der Traversierungen der Traversiereinheiten entspricht einer Phasenverschiebung kleiner 180°. Günstig ist es dabei weiter, wenn der Zeitversatz höchstens 7/8 der Traversierzeit für eine einmalige Überquerung beträgt. Andererseits führt eine parallele Bewegung entsprechend einem sehr niedrigen oder verschwindenden Zeitversatz zu einer redundanten Abtastung. Besser ist es, wenn die Messköpfe möglichst unterschiedliche Strecken überfahren, um besser über die Oberfläche verteilte Daten zu erhalten. Daher wird zusätzliche ein Zeitversatz von mindestens 1/8 der Traversierzeit für eine einmalige Traversierung bevorzugt.

Aufgrund der einstellbaren Phasenverschiebung, beziehungsweise einem einstellbaren Zeitversatz, mit welchem Traversierungen der Traversiereinheiten gestartet werden, ist es möglich, die Lage Kreuzungspunkte der von den Messlöpfen überfahrenen Messlinien in Richtung quer zur Vorschubrichtung zu variieren. Dies ist hinsichtlich der Genauigkeit, mit der Daten gewonnen werden, relevant. Bei einem Float-Prozess ergeben sich die meisten Dickenvariationen in der Regel eher am Rand des Substrats. Durch eine geeignete Phasenverschiebung können die Kreuzungspunkte der Messlinien dann in Richtung Rand verschoben werden, während bei einer gegenphasigen Bewegung die Kreuzungspunkte in der Mitte liegen. An den Kreuzungspunkten können die Daten der Messköpfe abgeglichen werden, so daß hier eine sehr hohe Messgenauigkeit vorliegt. Es ist demnach oft günstg, wenn eine Phasenverschiebung ungleich 180° gewählt wird.

Der Erfindung liegt die Idee zugrunde, alle Meßköpfe über das gesamte Substrat hinweg bewegen zu können. Denkbar wäre auch, daß einzelne Meßköpfe jeweils Teilbereiche des Substrats abtasten. Hierbei entsteht allerdings der Nachteil einer erhöhten Empfindlichkeit gegenüber Ausfällen. Fällt ein Meßkopf aus, so werden Streifen des Substrats entlang der Vorschubrichtung nicht mehr abgetastet. Werden demgegenüber die Meßköpfe phasenverschoben über das Substrat bewegt, so erfolgt eine vollständige Abrasterung des Substrats selbst dann, wenn einer der Meßköpfe ausfällt, auch wenn der laterale Abstand der abgetasteten Streifen des Substrats dann unter Umständen zunimmt. Die erfindungsgemäße Lösung ist daher besonders robust gegen auftretende Fehler der Meßanordnung und gewährleistet eine Qualitätsanalyse selbst noch bei einem Teilausfall. Die bevorzugte unabhängige Bewegung der Traversiereinheiten erlaubt zudem auch noch eine Einstellung der Phasenverschiebung. Damit ist die Meßanordnung flexibel für verschiedene Substratbreiten und Vorschubgeschwindigkeiten einsetzbar. Die unabhängige Ansteuerung bietet in Verbindung mit der Überfahrung des gesamten Substrats insbesondere auch den Vorteil, daß die Vorrichtung nicht nur bei einem Ausfall eines Meßkopfes, sondern auch bei einem Ausfall einer gesamten Traversiereinheit funktionsfähig bleibt.

Mit der vorstehend beschriebenen Vorrichtung ist erfindungsgemäß entsprechend ein Verfahren zur Dickenmessung von transparenten flachen Substraten ausführbar, bei welchem zumindest zwei Meßköpfe jeweils an Traversiereinheiten befestigt sind und die Traversiereinheiten mittels einer Traversiereinrichtung über das Substrat quer zu einer Vorschubrichtung der Glasscheibe bewegt werden, und wobei mittels einer Steuereinrichtung die Bewegung der Traversiereinheiten phasenverschoben gesteuert wird und die Traversiereinheiten quer zur Vorschubrichtung des Substrats von Rand zu Rand bewegt werden, und wobei anhand der Daten der Meßköpfe mittels einer Auswerteeinrichtung Dickenprofile erstellt werden.

Die Erfindung ist besonders für die Überprüfung großflächiger Substrate, wie insbesondere von Glassubstraten für die Fertigung von TFT-Anzeigen geeignet. Dabei werden für die Herstellung der Anzeigen Glassubstrate mit einer Fläche von zumindest 0,42 Quadratmetern oder 0,6 x 0,7 Metern, entsprechend Glassubstraten der sogenannten Generation 4, vorzugsweise einer Fläche von zumindest 3,6 Quadratmetern, oder Maßen von zumindest 1,8 m x 2 Metern, beziehungsweise sogenannte Gläser der Generation 7 angestrebt. Die Erfindung ist darüber hinaus auch für Gläser der sogenannten Generation 9 oder Gläser mit Maßen von zumindest 2,7 x 2,3 Metern, beziehungsweise einer Fläche von zumindest 6,2 Quadratmetern geeignet.

Um derartige Substrate oder sogar noch breitere Glasbänder, aus denen diese Substrate geschnitten werden, hinsichtlich ihrer Dicke überprüfen zu können, sind beim Überfahren des Substrats hohe Traversiergeschwindigkeiten wünschenswert, so daß eine Inline-Überprüfung, also eine Überprüfung innerhalb des laufenden Produktionsprozesses ermöglicht wird. Der Meßprozess sollte dann für eine zuverlässige Überprüfung auch unempfindlich gegenüber Vibrationen des Substrats und insbesondere auch der Traversiereinheit sein. Es hat sich gezeigt, daß dazu insbesondere eine Vorrichtung zur Dickenmessung von transparenten flachen Substraten geeignet ist, welche wenigstens einen Meßkopf und eine Traversiereinrichtung mit einer Traversiereinheit umfasst, an welcher der Meßkopf befestigt ist und welche quer zu einer Vorschubrichtung des Substrats über das Substrat hinweg bewegbar ist, sowie einer Auswerteeinrichtung, welche anhand der Daten der Meßköpfe Dickenprofile erstellt, wobei der Meßkopf eine Meßeinrichtung zur chromatisch kodierten konfokalen Dickenmessung aufweist. Mit dieser Meßeinrichtung werden verschiedene Farben in unterschiedlicher Tiefe fokussiert und das von der Oberfläche reflektierte oder gestreute Licht vom Meßkopf aufgenommen, räumlich spektral aufgespalten und ein Intensitätsspektrum erfasst. Anhand des Abstands von Maxima im Intensitätsspektrum, die aufgrund der verstärkten Reflexion und Streuung an den Oberflächen des Substrats hervorgerufen werden, kann dann die lokale Dicke des Substrats bestimmt werden. Dementsprechend sieht die Erfindung auch ein mit der vorstehend beschriebenen Vorrichtung durchführbares Verfahren zur Dickenmessung von transparenten flachen Substraten vor, bei welchem wenigstens ein Meßkopf mit einer Traversiereinheit an eine Traversiereinrichtung, quer zu einer Vorschubrichtung des Substrats über das Substrat hinweg bewegt wird und mit einer Auswerteeinrichtung, anhand der Daten der Meßköpfe Dickenprofile erstellt werden, wobei der Meßkopf eine chromatisch kodierte konfokale Dickenmessung vornimmt, wobei verschiedene Farben in unterschiedlicher Tiefe fokussiert werden und das von der Oberfläche reflektierte oder gestreute Licht vom Meßkopf aufgenommen, räumlich spektral aufgespalten und ein Intensitätsspektrum erfasst wird und anhand des Abstands von Maxima im Intensitätsspektrum, die aufgrund der verstärkten Reflexion und Streuung an den Oberflächen des Substrats hervorgerufen werden, die lokale Dicke des Substrats bestimmt wird. In Kombination mit mehreren quer über das Substrat bewegbaren Traversiereinheiten, die vorzugsweise unabhängig voneinander steuerbar sind, wird eine Anordnung erreicht, die hochgenau mit hoher Geschwindigkeit und Ausfallsicherheit auch in der rauhen Umgebung einer Produktionsanlage Dickenprofile liefert.

Auch hat sich das chromatisch kodierte konfokale Meßverfahren als besonders günstig erwiesen, um auch Randbereiche eines Substrats präzise zu vermessen, deren Dicke sich stark von inneren Bereichen unterscheidet. So ergibt sich beim Floaten von Glasbändern im allgemeinen eine deutlich dickere Borte.

Neben der oben beschriebenen chromatisch kodierten Messung ist alternativ oder zusätzlich auch eine Triangulationsmessung denkbar. Demgemäß ist in Weiterbildung der Erfindung ein Meßkopf zur Triangulations-Dickenbestimmung vorgesehen, bei welchem ein Lichtstrahl unter schrägem Einfall auf das Substrat gerichtet und die räumliche Trennung der an den beiden Substratoberflächen reflektierten Teilstrahlen von einem Sensor erfasst wird.

Die Traversiereinrichtung ist besonders bevorzugt zum Überfahren eines zumindest 1 Meter, vorzugsweise zumindest 3,5 Meter, bei großen Glasbreiten in weiterer Ausgestaltung der Erfindung auch zum Überfahren eines zumindest 4,5 Meter breiten Substrats mit den Traversiereinheiten über die gesamte Breite des Substrats eingerichtet. Damit können auch Substrate überprüft werden, die deutlich breiter als das angestrebte Format für Substrate zur Fertigung von TFT-Anzeigen sind. Dies ermöglicht es, auch noch größere Substrate zu fertigen und/oder eine Schnittoptimierung beim Heraustrennen einzelner Substrate aus einem überprüften Glasband durchzuführen. Demgemäß ist in Weiterbildung der Erfindung eine Dickenmessung an einem kontinuierlichen Glasband und eine nachgeschaltete Schnittoptimierung unter Verwendung von an einem kontinuierlichen Glasband gemessenen Dickenprofile vorgesehen.

Alternativ oder zusätzlich zu einer Dickenmessung an einem kontinuierlichen Glasband können außerdem auch bereits vereinzelte Glasscheiben überprüft werden.

Für die großen Substratbreiten ist in Weiterbildung der Erfindung weiterhin vorgesehen, die Traversiereinheiten mit zumindest 0,5 Metern pro Sekunde, vorzugsweise von zumindest 4 Metern pro Sekunde, in weiterer Ausgestaltung der Erfindung sogar mit 8 Meter oder auch 10 Meter pro Sekunde über das Substrat zu bewegen. Damit kann selbst bei einer Substratbreite von 4 Metern oder darüber mit zwei phasenverschoben bewegten Traversiereinheiten eine Erstellung von Querprofilen im Sekundentakt erfolgen.

Vorzugsweise werden der oder die Meßköpfe weiterhin mit einer Meßfrequenz von mindestens 1 kHz, vorzugsweise 3 kHz ausgelesen. Es ist aber auch möglich, noch deutlich höhere Auslesefrequenzen zu realisieren. So kann in Weiterbildung der Erfindung das Auslesen mit einer Frequenz von zumindest 10 kHz, vorzugsweise 25 kHz, oder sogar über 100 kHz erfolgen. Bereits bei einer Meßfrequenz von 1 kHz oder darüber zeigt sich eine zunehmende Unempfindlichkeit der Messung gegenüber Vibrationen der Traversiereinheit und/ oder des Substrats. Die Verlässlichkeit der Dickendaten läßt sich insbesondere dann auch dadurch steigern, indem eine Datenverdichtung durchgeführt wird. Die verdichteten Daten, vorzugsweise um mindestens einen Faktor 3 verdichteten Daten, sind nochmals unempfindlicher gegenüber Vibrationen oder anderen Störungen, wie etwa aufgrund von Temperaturschwankungen auf oder über dem Substrat. Unter einer Verdichtung der Daten wird eine Verrechnung der Daten mehrerer benachbarter Messpunkte, insbesondere eine Mittelung verstanden. Vor einer Verdichtung kann vorteilhaft auch noch ein Algorithmus zur Entfernung von Artefakten in den Meßdaten eingesetzt werden, mit welchem stark gegenüber benachbarten Meßwerten abweichende Meßwerte ausgefiltert werden.

Die Dickenprofile können nicht nur zur Qualitätssicherung oder zur Qualitätsverbesserung durch eine Schnittoptimierung anhand der Meßdaten verwendet werden.

Vielmehr lassen sich die Dickenprofil-Daten auch zur Steuerung des Herstellungsprozesses des oder der Substrate verwenden. Eine solche Möglichkeit, den Herstellungsprozeß für die Substrate unter Verwendung der Dickenprofil-Daten zu regeln, ist, anhand der Dickenprofil-Daten die Temperaturführung einer Float-Vorrichtung zur Flachglasherstellung zu steuern. Diese Art der Steuerung ist besonders einfach und wirkungsvoll zu realisieren. Die Temperatur in der Floatglas-Wanne beeinflusst direkt die Dicke des fortlaufend hergestellten Glasbands. Bei höherer Temperatur sinkt die Viskosität des Glases und nimmt damit Einfluss auf die Formbarkeit des Glases. Die am sich bewegenden Floatglasband fortlaufend gemessenen Daten der Glasdicke können daher direkt verwendet werden, um durch damit gesteuerte Temperaturänderungen die Glasdicke auf den gewünschten Wert zu stabilisieren. Auch bei anderen Glasherstellungsverfahren, wie etwa beim Downdraw- oder Overflow-Fusion-Verfahren wirkt sich die Temperatur des Glases auf die Glasdicke aus. Demgemäß kann auch bei anderen Herstellungsverfahren für Flachglas die Erfindung vorteilhaft zur Regelung der Glasherstellung eingesetzt werden.

Gemäß noch einer Weiterbildung kann mittels einer geeigneten Recheneinrichtung auch der Massendurchsatz einer vorgeschalteten Anlage zur Herstellung der Substrate, insbesondere zur Herstellung eines kontinuierlichen Glasbands bestimmt und kontrolliert werden. Diese Meßwerte können dann ihrerseits zur Steuerung der vorgeschalteten Produktionsanlage eingesetzt werden, da sie ein direktes Maß dafür liefern, wieviel Material pro Zeiteinheit die Produktionsanlage, beispielsweise eine Floatglas-Wanne, verläßt. Es kann daher auch rückgeschlossen, beziehungsweise gesteuert werden, wieviel Ausgangsmaterial, beispielsweise die Rohstoffe für die Glasherstellung wieder zugeführt werden müssen.

Gemäß noch einer vorteilhaften Weiterbildung der Erfindung ist zumindest eine Traversiereinheit mit zumindest zwei Meßköpfen ausgestattet, die unterschiedliche Dicken-Meßbereiche, insbesondere unterschiedlich weite Dicken-Meßbereiche aufweisen. Dies ist sinnvoll, da es besonders beim Einfahren der Anlage oft zu starken Dickenschwankungen kommen kann. So gibt es bei der Herstellung von Floatglas-Bändern eine Gleichgewichtsdicke, die sich beim freien Ausbreiten des Glases auf dem Zinnbad einstellt. Diese Dicke ist oft wesentlich größer als die Dicke des Glases, welches mit der Anlage hergestellt werden soll. Üblicherweise wird dazu die Glasschmelze mit Toprollern auseinandergezogen, um die vorgesehene Dicke zu erreichen.

Es ist hier wünschenswert, wenn auch die Gleichgewichtsdicke noch mit der Meßanordnung vermessen werden kann. Dies ist unter mehreren Gesichtspunkten vorteilhaft. So kann bereits beim Einfahren der Anlage eine Dickenmessung vorgenommen werden. Auch kann dabei eine Bestimmung des Massendurchsatzes vorgenommen werden. Schließlich können die Dickenprofile des Glasbands mit der Gleichgewichtsdicke Rückschlüsse auf eventuelle systematische Inhomogenitäten in der Glasdicke liefern.

Die unterschiedlichen Meßköpfe haben noch einen weiteren besonderen Vorteil. Der Meßkopf mit dem größeren Meßbereich kann als Referenz und Kontrolle für den Meßkopf mit dem engeren Meßbereich eingesetzt werden. Bei dem Meßkopf mit dem engeren Meßbereich können infolge der höheren Empfindlichkeit Fehlmessungen, etwa infolge von Staubpartikeln auf der Oberfläche auftreten. Der Meßkopf mit dem weiteren Meßbereich hat zwar bei der Dickenmessung im allgemeinen eine größere Meßunsicherheit, allerdings kann durch Vergleich mit dessen Meßwert festgestellt werden, ob der empfindlichere Meßkopf mit dem engeren Meßbereich eine Fehlmessung produziert hat. Solche Fehlmessungen lassen sich damit also leicht erkennen und gegebenenfalls auch ausfiltern.

Die Meßdaten eines Meßkopfes können gemäß noch einer bevorzugten Weiterbildung der Erfindung dazu verwendet werden, um mittels einer geeigneten Einrichtung eine Regulierung des Abstands des Meßkopfes zum Substrat anhand von Daten des Meßkopfs vorzunehmen. Aus den Daten der Meßköpfe können also nicht nur Dickenmeßwerte sondern auch andere Informationen erhalten werden. Aus den von den Meßköpfen gelieferten Daten, wie insbesondere den Abstandsdaten, die auch zur Höhenregulierung einsetzbar sind, kann weiterhin auch sehr vorteilhaft eine Wölbung des Substrats entlang der jeweils überfahrenen Meßlinie bestimmt oder zumindest erkannt werden.

Bei einer Inline-Messung, ob an einem kontinuierlichen Band oder aus vom Band abgetrennten Substraten besteht generell das Problem, daß das an der Meßvorrichtung vorbeibewegte Substrat im allgemeinen nicht lagestabil in Bezug auf die vertikale Position transportiert werden kann. Das Substrat wird im allgemeinen zumindest vibrieren. Es ist daher überraschend, daß mit der erfindungemäßen Vorrichtung auch Aussagen über Wölbungen des Substrats im Inline-Betrieb erhalten werden können. So zeigt sich, daß anhand der Variation der mit den Messköpfen gemessenen Abstandswerte feststellen lässt, ob das Substrat eine unerwünschte Wölbung aufweist. Insbesondere kann ein sogenannter S-Warp festgestellt werden. Ein S-Warp ist eine sich entlang der Längskanten eines kontinuierlichen Substratbands aus einem erstreckende Wölbung im Randbereich des Substrats, kontinuierlichen Herstellungsprozess. Diese Wölbung ist dann selbstverständlich auch an aus dem Band geschnittenen einzelnen Substraten vorhanden. Die bei einem S-Warp auftretenden Wellen haben typischerweise eine Höhe im Bereich von 0,1 bis 2 Millimetern und eine Periode quer zur Längskante im Bereich von 10 bis 70 Zentimetern. Selbst wenn die Vibrationen des Substrats bei der Messung eine Auflösung der Wellenhöhen an sich nicht gestatten, läßt sich anhand der Schwankungen der über viele Messlinien gewonnenen Abstandswerte aussagen, ob die Wölbung, wie etwa ein S-Warp eine für die Produktqualität nachteilige Grösse aufweist. Überraschend kann ein S-Warp dabei sogar anhand der Variation der Abstandswerte entlang einer Linie quer zur Traversierrichtung, vorzugsweise entlang der Vorschubrichtung erkannt werden. Geeignet sind insbesondere Linien parallel zur Längskante des Substrats. Beispielsweise können jeweils die Abstands-Messwerte in der Bandmitte eines Glasbandes aufgezeichnet und überwacht werden. Steigt die Variation der Abstandswerte, nimmt also deren statistische Schwankung, beziehungsweise deren Streuung zu, so gibt dies einen Hinweis auf eine zunehmende Wölbung. Auch andere Wölbungen des Substrats können auf diese Weise erkannt werden.

Die Erfindung ist besonders geeignet für Flachglas-Produktionsanlagen, wie vorzugsweise Floatglas-Wannen, Downdraw- oder Overflow-Fusion-Anlagen. Ganz besonders geeignet ist die Erfindung dabei für Gläser, bei denen sehr geringe Dickentoleranzen wünschenswert oder erforderlich sind, also insbesondere Gläser für TFT-Display-Substrate. Eine derartige Anlage und die erfindungsgemäße Meßanordnung sind vorzugsweise zur Herstellung, beziehungsweise Prüfung sehr breiter Glasbänder mit einer Breite von zumindest 1 Meter, vorzugsweise zumindest 3,5 Metern, oder in weiterer Ausgestaltung der Erfindung auch zumindest 4,5 Meter und einer für Display-Anwendungen typischen Dicke von höchstens 1,2, vorzugsweise 0,8 Millimetern ausgelegt.

Werden die Daten des oder der Meßköpfe zur Prozeßsteuerung einer Flachglas-Produktionsanlage eingesetzt, ist demgemäß dabei eine Steuereinrichtung vorgesehen, welche den Flachglas-Produktionsprozeß unter Verwendung der Dickenprofil-Daten steuert. Insbesondere kann, wie bereits oben erwähnt, die Temperaturführung bei der FlachglasHerstellung unter Berücksichtigung der von den Meßköpfen gelieferten Daten geregelt werden.

Die Messung erfolgt insbesondere bei einer Inline-Überprüfung besonders bevorzugt an einem sich bewegenden Substrat, beispielsweise wie es bei einer Messung an einem kontinuierlichen Glasband aus einem kontinuierlichen Glasherstellungsprozess vorliegt.

Im folgenden wird die Erfindung anhand von Ausführungsbeispielen und unter Bezugnahme auf die Zeichnungen näher erläutert, wobei gleiche und ähnliche Elemente mit gleichen Bezugszeichen versehen sind und die Merkmale verschiedener Ausführungsbeispiele miteinander kombiniert werden können.

Es zeigen:

Fig. 1     einen schematische Ansicht von Teilen einer Meßanordnung zur Dickenmessung betrachtet entlang der Traversierrichtung,

Fig. 2     eine Ansicht der in Fig. 1 gezeigten Anordnung betrachtet entlang der Vorschubrichtung des Substrats,

Fig. 3     die Funktionsweise eines Meßkopfs zur chromatisch kodierten konfokalen Dickenmessung,

Fig. 4     ein Schema der phasenverschobenen Abtastung eines Glasbands mittels zweier unabhängig bewegbarer Traversiereinheiten,

Fig. 5A    eine Überlagerung mehrerer entlang derselben Linie gemessenen Dickenprofile,

Fig. 5B    die Überlagerung der in Fig. 5A gezeigten Dickenprofile nach einer vorausgegangenen Datenverdichtung,

Fig. 6     eine Aufzeichnung von in der Bandmitte eines Floatglas-Bandes aufgenommenen Abstandswerten.

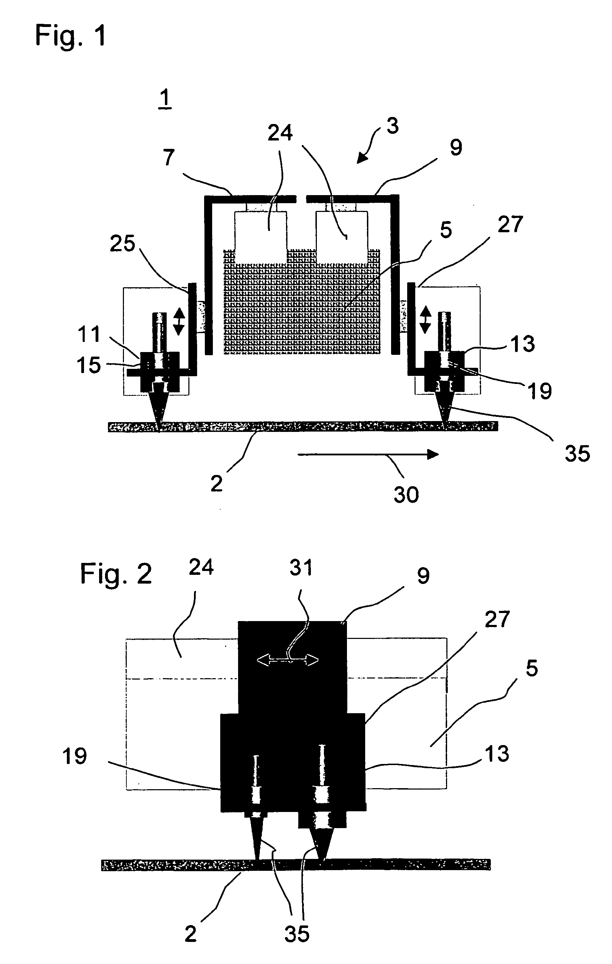

Die Fig. 1 und 2 zeigen Ansichten eines Ausführungsbeispiels einer Vorrichtung 1 zur Dickenmessung an einem Glasband 2. Das Glasband 2 wird kontinuierlich mittels einer der Vorrichtung 1 vorgeschalteten Produktionsanlage, beispielsweise einer Floatglas-Wanne erzeugt und entlang der Vorschubrichtung an der Vorrichtung 1 vorbeibewegt.

Die Vorrichtung 1 umfasst eine Traversiereinrichtung 3 mit einer Traverse 5 und zwei Traversiereinheiten 7 und 9, die entlang der Traverse 5 quer zur Vorschubrichtung in Traversierrichtung 31 bewegbar sind. Die Traversiereinheiten 7, 9 werden jeweils durch Servo-Linearantriebe 24 angetrieben.

Die Traversiereinheiten 7, 9 umfassen außerdem jeweils Aufhängungen 25, beziehungsweise 27 für die Meßköpfe zur Dickenmessung. Die Aufhängungen 25, 27 sind, wie anhand der Doppelpfeile angedeutet, höhenregelbar in Bezug auf das Glasband 2.

Jede Traversiereinheit 7, 9 ist jeweils mit zwei Meßköpfen 11, 15, beziehungsweise 13, 19 ausgestattet. Die Meßköpfe 11 und 13 weisen dabei einen anderen Meßbereich auf, als die Meßköpfe 15, 19, so daß jede der Traversiereinheiten 7, 9 mit Meßköpfen mit unterschiedlichen Meßbereichen ausgestattet sind. In einem konkreten Beispiel können die Meßköpfe 11 13 Glasdikken bis 3 Millimeter und die Meßköpfe 15, 19 Glasdicken bis 10 Millimeter erfassen. Mittels der Daten der Meßköpfe 11, 13 und 15, 19 werden Dickenprofile quer zur Vorschubrichtung 30 erstellt. Jeder der Meßköpfe wirft einen Lichtkegel 35 auf das Substrat, wobei Licht farbabhängig in unterschiedlichen Tiefen fokussiert

Da die Traversiereinheiten 7, 9 jeweils über einen eigenen Servo-Linearantrieb 24 verfügen, können die Traversiereinheiten 7, 9 insbesondere auch unabhängig voneinander und phasenverschoben über das Glasband 2 hinweg bewegt werden. Vorzugsweise erfolgt dabei sogar die Steuerung der Bewegung der beiden Traversiereinheiten über getrennte Rechner. Diese sind dann vorzugsweise miteinander vernetzt, um ein Abtasten des Glasbands mit definierter Phasenverschiebung zu realisieren.

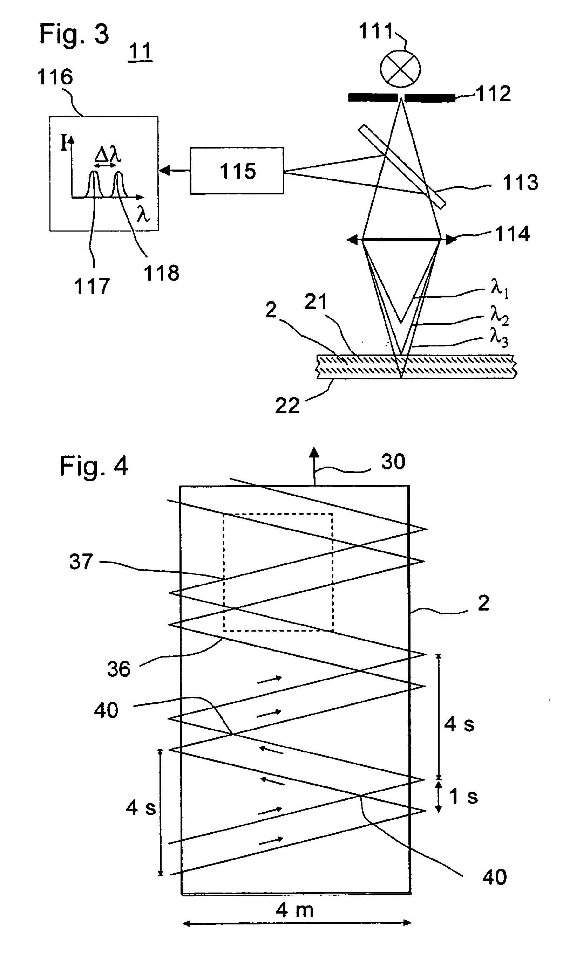

Nachfolgend wird anhand von Fig. 3 das Meßprinzip der Meßköpfe am Beispiel des Meßkopfs 11 genauer erläutert. Der Meßkopf 11 umfasst eine polychromatische Lichtquelle 111, beispielsweise eine Halogenlampe. Das Licht der Lichtquelle 111 wird mittels einer Lochblende abgeblendet, um das Licht möglichst punktförmig fokussieren zu können. Eine hoch dispersive Optik 114 fokussiert das aus der Blende 112 austretende Licht, wobei verschiedene Wellenlängen in unterschiedlichen Tiefen, beziehungsweise mit unterschiedlichen Brennweiten fokussiert werden. In Fig. 3 sind dabei als Beispiel die Lichtkegel dreier verschiedener Wellenlängen $\lambda_1$, $\lambda_2$, $\lambda_3$ dargestellt. Licht mit der Wellenlänge $\lambda_1$ wird dabei bereits vor der Oberfläche des Glasbands fokussiert. Der Fokus des Lichts der Wellenlänge $\lambda_2$ liegt demgegenüber auf der dem Meßkopf 11 zugewandten Seite 21 des Glasbands. Das Licht dieser Wellenlänge wird daher teilweise an der Oberfläche zurück in die Optik 114 reflektiert. Gleiches gilt für Licht der Wellenlänge $\lambda_3$, welches auf die dem Meßkopf 11 abgewandten Seite 22 des Glasbands 2 fokussiert wird. Da die Streuung innerhalb des Glases nur sehr gering ist, wird auch Licht mit einer Wellenlänge zwischen $\lambda_2$, und $\lambda_3$ nur in geringem

Maße in die Optik 114 zurückgeleitet. Das zurückreflektierte oder zurückgestreute Licht wird über einen halbdurchlässigen Spiegel 113 auf eine Eintrittsblende eines Spektrometer fokussiert und im Spektrometer analysiert. Ein schematisches Spektrum 116 ist zur Erläuterung in fig. 3 dargestellt.

Aufgrund der verstärkten Reflexion an den Grenzflächen des Glasbands sind im Spektrum des zurückreflektierten oder - gestreuten Lichts zwei Maxima 117 und 118 bei den Wellenlängen $\lambda_2$ und $\lambda_3$ vorhanden. Der Abstand $\Delta\lambda$ dieser Maxima korrespondiert dabei zum Abstand der beiden Seiten 21, 22, so daß sich aus der relativen Position der Maxima die Glasdicke bestimmen läßt. Zur Erstellung von Dickenprofilen wird demgemäß für die Meßpunkte auf dem Glasband 2 jeweils der Abstand der Intensitätsmaxima und daraus die lokale Dicke des Glasbands 2 bestimmt.

Auch korrespondiert die Absolutposition des Maximums des auf die Seite 21 fokussierten Lichts zum Abstand des Meßkopfes 11 zum Glasband 2. Daher wird die Absolutposition dieses Maximums für eine Abstandsregulierung mittels der Aufhängungen 25, beziehungsweise 27 verwendet. Aus den Daten der Absolutpositionen läßt sich dann auch der Warp, beziehungsweise die Verformung des Glasbands ermitteln.

Fig. 4 zeigt als Schema ein Beispiel für eine Abtastung eines Glasbands mittels einer wie anhand der Fig. 1 und 2 dargestellten Vorrichtung 1. Dazu sind in Fig. 4 die Pfade 36, 37 dargestellt, welche von den Meßköpfen 11, 13 an den Traversiereinheiten 7 und 9 abgefahren werden. Das in einem kontinuierlichen Herstellungsprozess erzeugte Glasband 2 bewegt sich entlang der Vorschubrichtung 30. Gleichzeitig werden die Traversiereinheiten 7, 9 senkrecht zur Vorschubrichtung 30 über das Glasband 2 entlang dessen Oberfläche bewegt. Durch die Kombination dieser beiden Bewegungen ergeben sich die beiden Zickzack-Pfade 36, 37. Die Breite des Glasbands 2 beträgt im dargestellten Beispiel 4 Meter. Die Traversiereinheiten 30 werden beide jeweils innerhalb von 4 Sekunden über das Glasband 2 hinweg und wieder zurück gefahren, so daß eine Überquerung des Glasbands 2 jeweils 2 Sekunde dauert. Die beiden Bewegungen sind außerdem um eine Sekunde phasenverschoben, beziehungsweise zeitlich versetzt. Die Traversierzeit für eine einmalige Überquerung beträgt 2 Sekunden, so daß der Zeitversatz von einer Sekunde in diesem Beispiel die Hälfte der Traversierzeit für eine einmalige Überquerung beträgt. Allgemein werden Zeitversätze bevorzugt, die jeweils kleiner als 7/8 und zumindest 1/8 der Traversierzeit für eine einmalige Überquerung der Traversiereinheiten betragen. Auf diese Weise sind die Kreuzungspunkte 40 der Messlinien, beziehungsweise Pfade 36, 37 im Gegensatz zu einer gegenphasigen Bewegung aus der Mitte des Glasbands zum Rand hin verschoben. Erfindungsgemäß ist es von Vorteil, wenn die Phasenverschiebung der Bewegung der Traversiereinheiten so gewählt wird, daß die Kreuzungspunkte außerhalb des mittleren Drittels des Substrats, beziehungsweise außerhalb eines mittigen, entlang der Vorschubrichtung verlaufenden Streifens liegen, der eine Breite von einem Drittel der Breite des Substrats, gemessen in Richtung senkrecht zur Vorschubrichtung hat. Dies ist günstig, da im Bereich der Kreuzungspunkte aufgrund der redundanten Messung eine hohe Messgenauigkeit besteht und diese Punkte in einem Bereich liegen, in welchem gegenüber der Mitte erhöhte Dickenschwankungen auftreten können.

Bei einer Vorschub-, beziehungsweise entsprechend einer Produktionsgeschwindigkeit von 3 Metern Glasband pro Minute können mit dieser Betriebsweise Dicken-Querprofile mit einem mittleren Abstand in Längsrichtung des Bandes von 0,1 Metern erzeugt werden. Bei einer Produktionsgeschwindigkeit von 10 Metern pro Minute können auf diese Weise immerhin noch Dickenprofile mit mittlerem Abstand von 0,33 Metern erstellt werden. Die Schnittoptimierung unter Verwendung der Dickenprofile erlaubt es dann, auch für sogenannte "Generation 7" - Substrate, oder sogar für sogenannte "Generation 9" - Substrate optimale Bereiche mit möglichst homogener Dicke aus dem Band 2 auszuwählen. Zur Verdeutlichung ist in Fig. 4 ein gestricheltes Kästchen eingezeichnet, welches einer Größe von 2,25 x 1,92 Metern gemäß einem "Generation 7" - Substrat entspricht. Auch ein Glassubstrat der sogenannten "Generation 9" mit Abmessungen von 2,86 x 2,46 Metern kann aus einem solchen Glasband noch herausgeschnitten werden. Ist beispielsweise die Dicke in der Nähe eines Randes des Glasbands zu groß oder klein, kann der Schnittbereich dann mehr zum gegenüberliegenden Rand verschoben werden. Zusätzlich oder alternativ besteht selbstverständlich auch die Möglichkeit, eine Schnittoptimierung durch Verschiebung des Schnittbereichs in Längsrichtung vorzunehmen.

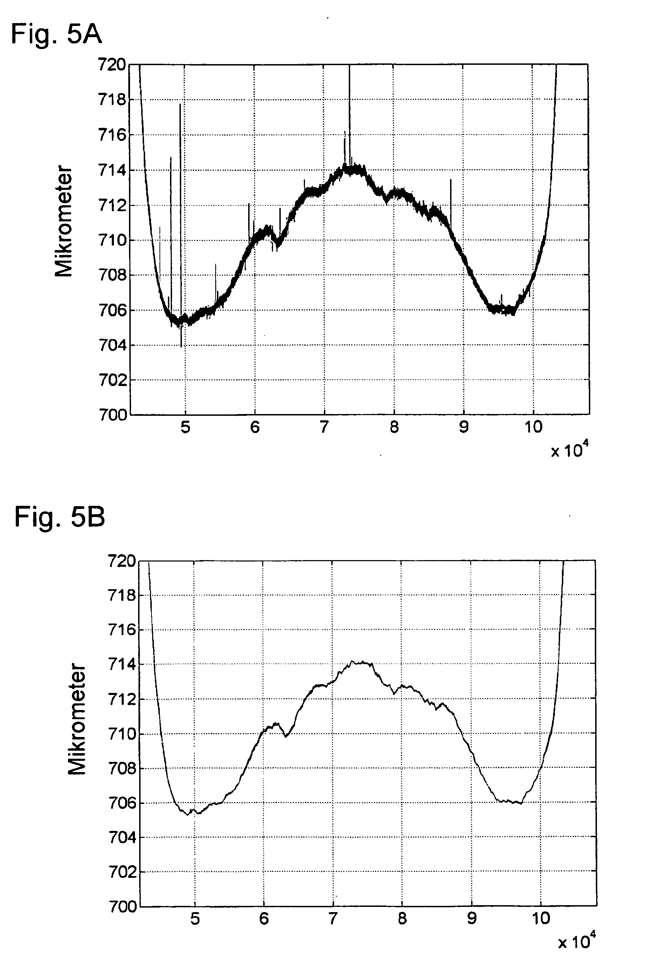

Anhand der Fig. 5A und 5B wird nachfolgend der vorteilhafte Effekt einer Datenreduktion oder Verdichtung beschrieben. Dazu zeigt Fig. 5A eine Überlagerung mehrerer entlang derselben Linie auf einem Floatglassubstrat gemessenen Dickenprofile und Fig. 5B die Dickenprofile nach einer Datenreduktion um einen beispielhaften Ausdünnungsfaktor 130. Die Daten wurden bei einer Vorschubgeschwindigkeit von 10 Metern pro Minute aufgenommen. Die Diagramme sind so skaliert, daß die Dickenschwankungen in inneren Bereichen des Floatglassubstrats vergrößert sind, so daß Meßwerte der deutlich dickeren Rand- oder Bortenbereiche außerhalb des dargestellten Dickenbereichs liegen und nicht mehr dargestellt sind.

Auf den Ordinaten sind jeweils die Dickenwerte in Mikrometer dargestellt. Wie anhand der Fig. 5A und 5B zu erkennen ist, weist das Substrat entlang der vermessenen Linie eine Dicke von im Schnitt etwas über 0,7 Millimetern auf. Die Werte der Abszissen sind jeweils die Indizes der Meßpunkte. Aufgrund von Störungen kann es zu Fehlmessungen kommen, die in Fig. 5A als deutlich abweichende Meßwerte erkennbar sind. Diese Werte können durch einen einfachen Algorithmus, beispielsweise durch Testen, ob ein gewisser Schwellwert in der Differenz zu benachbarten Dickenwerten überschritten wird, herausgefiltert werden. Insbesondere können die Meßwerte auch mit den Meßwerten des zusätzlichen Meßkopfs mit dem weiteren Meßbereich als Referenz verglichen und so Fehlmessungen erkannt werden.

Bereits bei den in Fig. 5A gezeigten Originaldaten zeigt sich eine nur geringe Streuung der Meßwerte verschiedener Messungen. Mit der Datenreduktion, wie sie in Fig. 5B vorgenommen wurde, bei der mehrere benachbarte Meßwerte miteinander verrechnet und zusammengefasst werden, kann die Streuung nochmals deutlich reduziert werden.

Dies äußert sich insbesondere in einem verbesserten Fähigkeitsindex cgm für die Wiederholgenauigkeit eines Prüfmittels. Der Fähigkeitsindex cgm ist definiert als

$$cgm = (0,2 \cdot T)/6\sigma$$

und ist ein Maß für die Meßgerätestreuung.

Dabei bezeichnet T den Toleranzbereich und σ die Standardabweichung. Eine Prüfmittelfähigkeit ist gegeben, wenn der cgm-Wert größer als 1,33 ist.

Bei einem geforderten Toleranzbereich von 10 Mikrometer ergibt sich bei den Originaldaten ein cgm-Wert von etwa 1,2. Bei den gemäß Fig. 5B gefilterten Daten liegt der cgm-Wert dagegen bei etwa 3,5. Die Datenreduktion ergibt daher selbst bei hohen Vorschubgeschwindigkeiten bis 10 Metern pro Minute eine verlässliche Messung mit einer Genauigkeit von 1 Mikrometer.

Die Dickenprofil-Daten, wie sie als Beispiel in Fig. 5B dargestellt sind, können nun nicht nur für eine Schnittoptimierung beim Abtrennen einzelner Glasscheiben verwendet werden. Vielmehr können die Daten auch in den Glasherstellungsprozess rückgekoppelt werden, um diesen zu steuern und die gewünschte Glasdicke zu erhalten. Liegt beispielsweise der mittlere Dickenwert des in Fig. 5A gezeigten Dickenprofils oberhalb oder unterhalb des gewünschten Werts, können die Prozessparameter vorgeschalteter Glasformgebungseinheiten angepasst werden, um die gewünschte Glasdicke zu erzielen.

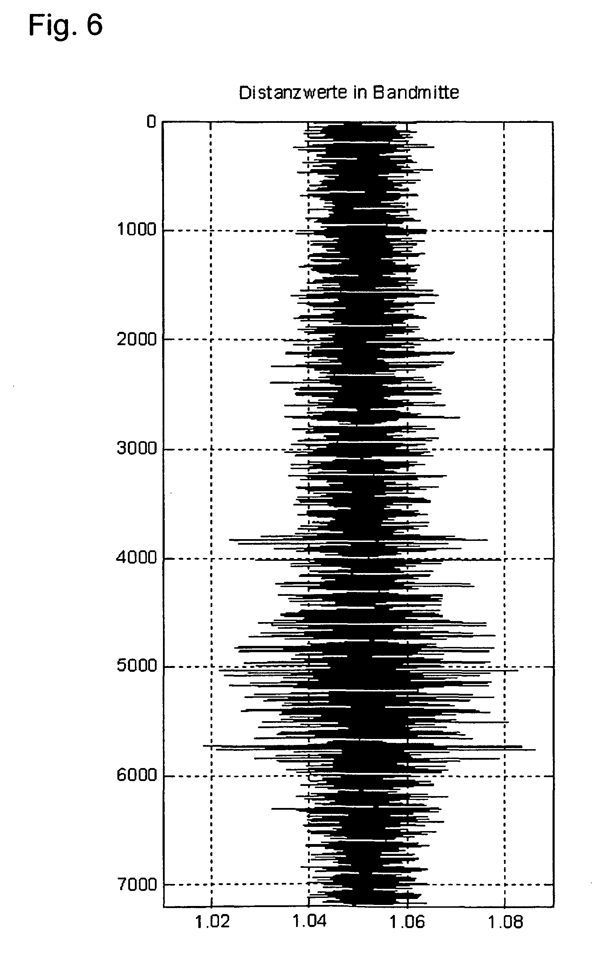

Fig. 6 zeigt ein Beispiel wie weitere Parameter mit der erfindungsgemäßen Vorrichtung bestimmt werden können. Im gezeigten Beispiel wird anhand von Abstandswerten, welche die Messköpfe liefern, erkannt wird, ob eine eventuell vorhandene Substratwölbung zu große Werte annimmt. Im Speziellen handelt es sich hier um einen sogenannten S-Warp als Wölbung. Die Daten wurden bei einer Inline-Messung an einem kontinuierlichen Floatglas-Band jeweils in der Bandmitte aufgenommen. Gezeigt sind die fortlaufend entlang der Ordinate aufgetragenen Abstandsmessungen von etwas über 7000 Traversierungen. Der mittlere Abstandswert liegt bei etwa 1,05. Die Abstands-Skala auf der Abszisse ist dabei in willkürlichen Einheiten angegeben.

Wie anhand von Fig. 6 zu erkennen ist, liegt die Streuung der Abstandswerte bei den ersten 3500 Messungen im wesentlichen innerhalb eines Bereichs von 1,04 bis 1,06. Danach treten Bereiche auf, in welchen die Schwankung der Messwerte deutlich zunimmt. So zeigen die Messwerte einen längeren Bereich mit erhöhter Schwankung, dessen Mitte etwa beim 5000. Messwert liegt. Vor und hinter diesem Bereich ist jeweils ein weiterer, eng begrenzter Bereich mit stark erhöhter Streuung der Messwerte vorhanden. Diese Bereiche liegen bei etwa der 3800. und 5700. Traversierung.

Eine Nachprüfung an aus dem Glasband geschnittenen Glasscheiben in einer gesonderten Messapparatur zeigt, daß gerade in den Bereichen mit erhöhter Streuung ein erhöhter S-Warp vorhanden ist. Die Streuung der Abstandswerte liefert daher Rückschlüsse auf den Produktionsprozess und dieser kann entsprechend angepasst werden, wenn die Streuung der Abstands-Messwerte im Mittel einen vorgegebenen Bereich überschreitet. Es ist überraschend, daß eine solche Abstandsmessung überhaupt Informationen über eine Substratwölbung liefern kann, da die Auslenkung der Substratoberfläche aufgrund der bei der Inline-Messung vorhandenen Vibrationen des Substrats im allgemeinen grösser ist als eine gegebenenfalls vorhandene Wölbung des Substrats. Es ist außerdem überraschend, daß sich eine Wölbung nach Art eines S-Warps, die an den Rändern des Bandes vorhanden ist, an einer ganz anderen Stelle, nämlich in einem mittleren Bereich des Bandes nachweisen lässt.

Es ist dem Fachmann ersichtlich, daß die vorstehend beschriebene Ausführungsform der Erfindung, bei welcher kleine Substratwölbungen in einem Inline-Verfahren festgestellt werden, nicht davon abhängt, ob mehrere Messköpfe vorhanden sind, oder ob mit den Messköpfen eine Dickenmessung durchgeführt wird. Diese Ausführungsform kann daher auch mit einem einzelnen Messkopf durchgeführt werden.

Es ist dem Fachmann weiterhin ersichtlich, dass die Erfindung nicht auf die vorstehend beschriebenen beispielhaften Ausführungsformen beschränkt ist, sondern vielmehr in vielfältiger Weise variiert werden kann. Insbesondere können die Merkmale der einzelnen Ausführungsbeispiele auch miteinander kombiniert werden.

Die Erfindung ist in den nachfolgenden Ansprüchen definiert.

**Patentansprüche**

1. Vorrichtung (1) zur Dickenmessung von transparenten flachen Substraten (2), umfassend zumindest zwei Messköpfe (11, 15, 13, 19) und eine Traversiereinrichtung (3) mit zwei Traversiereinheiten (7, 9), an welchen die Messköpfe (11, 15, 13, 19) befestigt und über ein Substrat (2) quer zu einer Vorschubrichtung (30) des Substrats bewegbar sind, wobei die Traversiereinheiten (7, 9) unabhängig voneinander bewegbar sind, sowie eine Steuereinrichtung, welche eingerichtet ist die Bewegung der Traversiereinheiten (7, 9) so zu steuern, dass die Traversiereinheiten (7,9) im Betrieb phasenverschoben quer zur Vorschubrichtung (30) des Substrats (2) von Rand zu Rand bewegt werden, und eine Auswerteeinrichtung, welche anhand der Daten der Messköpfe (11, 15, 13, 19) Dickenprofile erstellt, **dadurch gekennzeichnet, dass** die Steuereinrichtung eingerichtet ist die Phasenverschiebung der Bewegung der Traversiereinheiten (7, 9) so zu steuern, dass die Kreuzungspunkte (40) der Messlinien außerhalb eines mittigen, entlang der Vorschubrichtung (30) verlaufenden Streifens liegen, der eine Breite von einem Drittel der Breite des Substrats (2), gemessen in Richtung senkrecht zur Vorschubrichtung (30) hat.

2. Vorrichtung (1) nach Anspruch 1, wobei die Messköpfe (11, 15, 13, 19) eine Messeinrichtung zur chromatisch kodierten konfokalen Dickenmessung aufweisen, wobei verschiedene Farben in unterschiedlicher Tiefe fokussiert werden und das von der Oberfläche (21 oder 22) reflektierte oder gestreute Licht vom Messkopf (11, 15, 13, oder 19) aufgenommen, räumlich spektral aufgespalten und ein Intensitätsspektrum (116) erfasst wird, wobei anhand des Abstands von Maxima (117, 118) im Intensitätsspektrum (116), die aufgrund der verstärkten Reflexion und Streuung an den Oberflächen (21, 22) des Substrats (2) hervorgerufen werden, die lokale Dicke des Substrats (2) bestimmt wird.

3. Vorrichtung (1) gemäß einem der vorstehenden Ansprüche, **gekennzeichnet durch** eine Einrichtung zur Ermittlung des Massendurchsatzes einer vorgeschalteten Anlage zur Herstellung der Substrate (2), insbesondere zur Herstellung eines kontinuierlichen Glasbands.

4. Vorrichtung (1) gemäß einem der vorstehenden Ansprüche, **dadurch gekennzeichnet, dass** zumindest eine Traversiereinheit (7, 9) mit zumindest zwei Messköpfen (11, 15, 13, 19) ausgestattet ist, die unterschiedliche Dicken-Messbereiche aufweisen.

5. Verfahren zur Dickenmessung von transparenten flachen Substraten (2), insbesondere mittels einer Vorrichtung (1) gemäß einem der vorstehenden Ansprüche, bei welchem zumindest zwei Messköpfe (11, 15, 13, 19) jeweils an Traversiereinheiten (7, 9) befestigt sind und die Traversiereinheiten (7, 9) mittels einer Traversiereinrichtung (3) über das Substrat (2) quer zu einer Vorschubrichtung (30) des Substrats bewegt werden, und wobei mittels einer Steuereinrichtung die Bewegung der Traversiereinheiten (7, 9) phasenverschoben gesteuert wird und die Traversiereinheiten quer zur Vorschubrichtung (30) des Substrats (2) von Rand zu Rand bewegt werden, und wobei anhand der Daten der Messköpfe (11, 15, 13, 19) mittels einer Auswerteeinrichtung Dickenprofile erstellt werden, **dadurch gekennzeichnet, dass** die Phasenverschiebung der Bewegung der Traversiereinheiten (7, 9) so gewählt wird, dass die Kreuzungspunkte (40) der Messlinien außerhalb eines mittigen, entlang der Vorschubrichtung (30) verlaufenden Streifens liegen, der eine Breite von einem Drittel der Breite des Substrats (2), gemessen in Richtung senkrecht zur Vorschubrichtung (30) hat.

6. Verfahren nach vorstehendem Anspruch, wobei die Messköpfe (11, 15, 13, 19) eine chromatisch kodierte konfokale Dickenmessung vornehmen, wobei verschiedene Farben in unterschiedlicher Tiefe fokussiert werden und das von der Oberfläche (21 oder 22) reflektierte oder gestreute Licht vom Messkopf (11, 15, 13, 19) aufgenommen, räumlich spektral aufgespalten und ein Intensitätsspektrum (116) erfasst wird und anhand des Abstands von Maxima (117, 118) im Intensitätsspektrum (116), die aufgrund der verstärkten Reflexion und Streuung an den Oberflächen (21, 22) des Substrats (2) hervorgerufen werden, die lokale Dicke des Substrats (2) bestimmt wird.

7. Verfahren gemäß einem der beiden vorstehenden Ansprüche, **dadurch gekennzeichnet, dass** mit einem Messkopf (11, 15, 13, 19) eine Triangulations-Dickenbestimmung durchgeführt wird, wobei ein Lichtstrahl unter schrägem Einfall auf das Substrat (2) gerichtet und die räumliche Trennung der an den beiden Substratoberflächen (21, 22) reflektierten Teilstrahlen von einem Sensor erfasst wird.

8. Verfahren gemäß einem der Ansprüche 5 bis 7, **dadurch gekennzeichnet, dass** zumindest zwei Messköpfe (11, 15, 13, 19) an Traversiereinheiten (7, 9) einer Traversiereinrichtung (3) unabhängig voneinander über das Substrat (2) bewegt werden.

9. Verfahren gemäß einem der Ansprüche 5 bis 8, **dadurch gekennzeichnet, dass** die Dickenmessung an einem kontinuierlichen Glasband (2) erfolgt.

10. Verfahren gemäß dem vorstehenden Anspruch, **dadurch gekennzeichnet, dass** anhand der Dickenmessung eine Schnittoptimierung für das Heraustrennen einzelner Substratscheiben erfolgt.

11. Verfahren gemäß einem der Ansprüche 5 bis 10, **dadurch gekennzeichnet, dass** der Herstellungsprozess für die Substrate (2) unter Verwendung der Dickenprofil-Daten gesteuert wird.

**12.** Verfahren gemäß einem der Ansprüche 5 bis 11, **dadurch gekennzeichnet, dass** anhand der von den Messköpfen (11, 15, 13, 19) gelieferten Daten eine Wölbung des Substrats 2) erkannt oder bestimmt wird.

**13.** Verfahren gemäß einem der Ansprüche 5 bis 12, **dadurch gekennzeichnet, dass** anhand der Dickenprofile der Massendurchsatz einer vorgeschalteten Anlage zur Herstellung der Substrate (2) bestimmt und kontrolliert wird.

**14.** Flachglas-Produktionsanlage, **gekennzeichnet durch** eine Vorrichtung (1) gemäß einem der Ansprüche 1 bis 4.

**Claims**

**1.** Apparatus (1) for measuring the thickness of transparent, flat substrates (2), including at least two measuring heads (11, 15, 13, 19) and a traversing device (3) having two traversing units (7, 9), to which the measuring heads (11, 15, 13, 19) are attached and on which they can be moved over a substrate (2) transverse to a feed direction (30) of the substrate, wherein the traversing units (7, 9) can be moved independently of each other, as well as a control device which is arranged to control the movement of the traversing units (7, 9) such that the traversing units (7, 9) are moved during operation in a phase-shifted manner transverse to the feed direction (30) of the substrate (2) from edge to edge, and an evaluating device which generates thickness profiles using the data from the measuring heads (11, 15, 13, 19), **characterised in that** the control device is arranged to control the phase-shifting of the movement of the traversing units (7, 9) such that the intersection points (40) of the measuring lines lie outside a central strip extending in the feed direction (30) and having a width equal to a third of the width of the substrate (2) measuring in a direction perpendicular to the feed direction (30).

**2.** Apparatus (1) as claimed in Claim 1, wherein the measuring heads (11, 15, 13, 19) comprise a measuring device for measuring the thickness in a confocal and chromatically encoded manner, wherein different colours are focussed in different depths and the light scattered or reflected from the surface (21 or 22) is received by the measuring head (11, 15, 13 or 19) and is split in a spatial and spectral manner and an intensity spectrum (116) is detected, wherein the local thickness of the substrate (2) is determined using the distance between maxima (117, 118) in the intensity spectrum (116) which are caused by the increased reflection and scattering at the surfaces (21, 22) of the substrate (2).

**3.** Apparatus (1) as claimed in any one of the preceding claims, **characterised by** a device for determining the mass throughput of a system, connected upstream, for producing the substrates (2), in particular for producing a continuous glass sheet.

**4.** Apparatus (1) as claimed in any one of the preceding claims, **characterised in that** at least one traversing unit (7, 9) is provided with at least two measuring heads (11, 15, 13, 19) which have different thickness measuring ranges.

**5.** Method for measuring the thickness of transparent, flat substrates (2), in particular by means of an apparatus (1) as claimed in any one of the preceding claims, wherein at least two measuring heads (11, 15, 13, 19) are attached in each case to traversing units (7, 9) and the traversing units (7, 9) are moved by means of a traversing device (3) over the substrate (2) transverse to a feed direction (30) of the substrate, and wherein by means of a control device the movement of the traversing units (7, 9) is controlled in a phase-shifted manner and the traversing units are moved transverse to the feed direction (30) of the substrate (2) from edge to edge, and wherein thickness profiles are generated by means of an evaluating device using the data from the measuring heads (11, 15, 13, 19), **characterised in that** the phase-shifting of the movement of the traversing units (7, 9) is selected such that the intersection points (40) of the measuring lines lie outside a central strip extending in the feed direction (30) and having a width equal to a third of the width of the substrate (2) measuring in a direction perpendicular to the feed direction (30).

**6.** Method as claimed in the preceding claim, wherein the measuring heads (11, 15, 13, 19) measure the thickness in a confocal and chromatically encoded manner wherein different colours are focussed in different depths and the light scattered or reflected from the surface (21 or 22) is received by the measuring head (11, 15, 13, 19) and is split in a spatial and spectral manner and an intensity spectrum (116) is detected, and the local thickness of the substrate (2) is determined using the distance between maxima (117, 118) in the intensity spectrum (116) which are caused by the increased reflection and scattering at the surfaces (21, 22) of the substrate (2).

**7.** Method as claimed in any one of the two preceding claims, **characterised in that** a measuring head (11, 15, 13, 19) performs a triangulation thickness determination, wherein a light beam is directed onto the substrate (2) with oblique incidence and the spatial separation of the partial beams reflected at the two substrate surfaces (21, 22) is detected by a sensor.

8. Method as claimed in any one of Claims 5 to 7, **characterised in that** at least two measuring heads (11, 15, 13, 19) are moved independently of each other over the substrate (2) on traversing units (7, 9) of a traversing device (3).

9. Method as claimed in any one of Claims 5 to 8, **characterised in that** the thickness is measured on a continuous glass sheet (2).

10. Method as claimed in the preceding claim, **characterised in that** a sectional optimisation is performed using the thickness measurement for the separation of individual substrate plates.

11. Method as claimed in any one of Claims 5 to 10, **characterised in that** the production process for the substrates (2) is controlled using the thickness profile data.

12. Method as claimed in any one of Claims 5 to 11, **characterised in that** a curvature of the substrate (2) is recognised or determined using the data supplied by the measuring heads (11, 15, 13, 19).

13. Method as claimed in any one of Claims 5 to 12, **characterised in that** the mass throughput of a system, connected upstream, for producing the substrates (2) is determined and controlled using the thickness profiles.

14. Flat glass production system, **characterised by** an apparatus (1) as claimed in any one of Claims 1 to 4.


**Revendications**

1. Installation (1) pour la mesure de l'épaisseur de substrats (2) plats transparents, comprenant au moins deux têtes de mesure (11, 15, 13, 19) et un dispositif à traverses (3) comportant deux unités de traverse (7, 9) sur lesquelles les têtes de mesure (11, 15, 13, 19) sont fixées et déplaçables au-dessus d'un substrat (2) transversalement à une direction d'avance (30) du substrat, les unités de traverse (7, 9) étant déplaçables indépendamment l'une de l'autre, ainsi qu'un dispositif de commande prévu pour commander le déplacement des unités de traverse (7, 9) de telle manière que les unités de traverse (7, 9) soient en cours de fonctionnement déphasées de bord à bord transversalement à la direction d'avance (30) du substrat (2), et un dispositif d'évaluation établissant des profils d'épaisseur à partir des données des têtes de mesure (11, 15, 13, 19), **caractérisée en ce que** le dispositif de commande est prévu pour commander le déphasage du déplacement des unités de traverse (7, 9) de telle manière que les points d'intersection (40) des lignes de mesure soient extérieurs à une bande centrale qui s'étend le long de la direction d'avance (30) et présente une largeur d'un tiers de la largeur du substrat (2), mesurée dans la direction perpendiculaire à la direction d'avance (30).

2. Installation (1) selon la revendication 1, où les têtes de mesure (11, 15, 13, 19) comportent un dispositif de mesure pour la mesure confocale d'épaisseur à codage chromatique, différentes couleurs étant focalisées à des profondeurs différentes et la lumière réfléchie ou diffusée par la surface (21 ou 22) étant absorbée par la tête de mesure (11, 15, 13, 19), spectralement décomposée dans l'espace, et un spectre d'intensité (116) étant saisi, et où l'épaisseur locale du substrat (2) est déterminée à partir de l'écart des maxima (117, 118) du spectre d'intensité (116) formés en raison de la réflexion et de la diffusion accrues sur les surfaces (21, 22) du substrat (2).

3. Installation (1) selon l'une des revendications précédentes, **caractérisée par** un dispositif de détermination du débit massique d'une installation en amont pour la fabrication des substrats (2), en particulier pour la fabrication d'une bande de verre continue.

4. Installation (1) selon l'une des revendications précédentes, **caractérisée en ce qu'**au moins une unité de traverse (7, 9) est pourvue d'au moins deux têtes de mesure (11, 15, 13, 19) présentant des plages de mesure d'épaisseur différenciées.

5. Procédé de mesure d'épaisseur de l'épaisseur de substrats (2) plats transparents, en particulier au moyen d'une installation (1) selon l'une des revendications précédentes, où au moins deux têtes de mesure (11, 15, 13, 19) sont fixées sur des unités de traverse (7, 9) respectives et les unités de traverse (7, 9) déplacées au-dessus du substrat (2) au moyen d'un dispositif à traverses (3) transversalement à une direction d'avance (30) du substrat, et où le déplacement des unités de traverse (7, 9) est commandé en déphasage au moyen d'un dispositif de commande et les unités de traverse déplacées de bord à bord transversalement à la direction d'avance (30) du substrat (2), et où des profils d'épaisseur sont établis au moyen d'un dispositif d'évaluation à partir des données des têtes de mesure (11, 15, 13, 19), **caractérisé en ce que** le déphasage du déplacement des unités de traverse (7, 9) est sélectionné de telle manière que les points d'intersection (40) des lignes de mesure soient extérieurs à une bande centrale qui s'étend le long de la direction d'avance (30) et présente une largeur d'un tiers de la largeur du substrat (2), mesurée dans la direction perpendiculaire à la direction d'avance (30).

6. Procédé selon la revendication précédente, où les têtes de mesure (11, 15, 13, 19) procèdent à une mesure confocale d'épaisseur à codage chromatique, différentes couleurs étant focalisées à des profondeurs différentes et la lumière réfléchie ou diffusée par la surface (21 ou 22) étant absorbée par la tête de mesure (11, 15, 13, 19), spectralement décomposée dans l'espace, et un spectre d'intensité (116) étant saisi, et où l'épaisseur locale du substrat (2) est déterminée à partir de l'écart des maxima (117, 118) du spectre d'intensité (116) formés en raison de la réflexion et de la diffusion accrues sur les surfaces (21, 22) du substrat (2).

7. Procédé selon l'une des deux revendications précédentes, **caractérisé en ce qu'**une détermination d'épaisseur par triangulation est effectuée par une tête de mesure (11, 15, 13, 19), un faisceau lumineux étant dirigé vers le substrat (2) sous une incidence oblique et la division spatiale des faisceaux partiels réfléchis sur les deux surfaces (21, 22) du substrat étant saisie par un capteur.

8. Procédé selon l'une des revendications 5 à 7, **caractérisé en ce qu'**au moins deux têtes de mesure (11, 15, 13, 19) sur les unités de traverse (7, 9) d'un dispositif à traverses (3) sont déplacées indépendamment l'une de l'autre au-dessus du substrat (2).

9. Procédé selon l'une des revendications 5 à 8, **caractérisé en ce que** la mesure d'épaisseur est effectuée sur une bande de verre (2) continue.

10. Procédé selon la revendication précédente, **caractérisé en ce qu'**une optimisation de coupe est obtenue à partir de la mesure d'épaisseur, pour l'extraction de différentes tranches de substrat.

11. Procédé selon l'une des revendications 5 à 10, **caractérisé en ce que** le processus de fabrication pour les substrats (2) est commandé en recourant aux données de profil d'épaisseur.

12. Procédé selon l'une des revendications 5 à 11, **caractérisé en ce qu'**une convexité du substrat (2) est détectée ou déterminée à partir des données fournies par les têtes de mesure (11, 15, 13, 19).

13. Procédé selon l'une des revendications 5 à 12, **caractérisé en ce que** le débit massique d'une installation en amont pour la fabrication des substrats (2) est déterminé et contrôlé à partir des profils d'épaisseur.

14. Installation de production de verre plat, **caractérisée par** une installation (1) selon l'une des revendications 1 à 4.

EP 2 044 387 B1

Fig. 1

Fig. 2

13

Fig. 3

Fig. 4

## Fig. 5A

## Fig. 5B

# Fig. 6

Distanzwerte in Bandmitte

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060150678 A1
- US 4476717 A
- EP 452666 A1
- EP 0546362 A2
- US 3670568 A
- US 3822383 A